# EUROPÄISCHE PATENTSCHRIFT

(11) **EP 1 506 885 B1**
(45) Veröffentlichungstag und Bekanntmachung des Hinweises auf die Patenterteilung: **03.01.2007**
(21) Anmeldenummer: 04018752.8
(22) Anmeldetag: 06.08.2004
(51) Int. Cl.: B60D 1/145, B60D 1/28, B60D 1/54

(54) **Zugdeichselkupplung**
Towing system with elongated shaft
Attelage à timon

(30) Priorität: 14.08.2003 DE 20312617 U
(43) Veröffentlichungstag der Anmeldung: 16.02.2005
(73) Patentinhaber: GEBHARDT Transport- und Lagersysteme GmbH, 93413 Cham (DE)
(72) Erfinder: Gissibl, Hermann, 92709 Moosbach (DE)
(74) Vertreter: Schieschke, Klaus

(56) Entgegenhaltungen:
- DE-A- 10 059 256
- DE-U- 7 801 604
- FR-A- 2 453 740
- US-A- 4 351 541

## Beschreibung

Die Erfindung betrifft eine Zugdeichselkupplung für einen Rollbehälter, mit einer an der Vorderseite des Rollbehälters angeordneten, federbeaufschlagten, um eine quer zur Fahrtrichtung des Behälters liegenden Achse schwenkbaren Zugdeichsel, welche stirnseitig über eine Öse mit einem hängend befestigten Haltebolzen an der Rückseite eines davor befindlichen Rollbehälters verbindbar ist.

Als Stand der Technik ist bereits eine derartige Zugdeichselanordnung bekannt (DE 200 22 976 U1). Hier findet ein die vertikale Beweglichkeit der Zugdeichsel einengendes Widerlager Anwendung, welches bewirkt, dass im Auflaufbetrieb die auf einem Kupplungsbolzen steckende Zugdeichsel mit ihrem freien Ende unter Ausnutzung der durch die in Deichselrichtung längliche Öse gegebene Beweglichkeit mit dem Widerlager überlappt und dadurch auf dem Kupplungsbolzen gehalten wird, entsprechend Anspruch 1 der vorgenannten Druckschrift.

Damit ergibt sich ein konstruktiver Aufwand, um die vorgenannte Wirkung sicher zu stellen.

Weiterer Stand der Technik ist eine Anhängevorrichtung für fahrbare Gegenstände (DE 80 06 672 U1). Auch hier findet ein hängend angeordneter Haltebolzen Anwendung, welcher mit einem aus Flacheisen ausgebildeten Tragteil als Zugdeichsel zusammenwirkt.

Außer dem vorgenannten Stand der Technik sind weitere Kupplungen für Transportwagen für Stückgüter bzw. Kugelgelenkanhängerkupplungen bekannt (DE 24 46 875, DE 26 28 06 14, US 4 351 541).

Gegenüber dem vorgenannten Stand der Technik besteht die Aufgabe der vorliegenden Erfindung darin, eine Zugdeichselkupplung zu schaffen, welche im Aufbau vereinfacht ist, wobei gleichzeitig eine effektive Kupplungsfunktion sicher gestellt werden soll.

Diese Aufgabe wird erfindungsgemäß dadurch gelöst, dass der Haltebolzen stirnseitig einen im Durchmesser kleiner als die Öse ausgebildeten, eine Senkbewegung der Zugdeichsel begrenzenden Bund aufweist. Dieser Bund kann als flache Scheibe oder als Kegelstumpf ausgebildet sein und bewirkt trotz seiner einfachen Konstruktion eine hohe Effektivität der Kupplungswirkung, da hierdurch sichergestellt wird, dass die Zugdeichsel ihre Kupplungsfunktion erfüllt.

Erfindungsgemäß kann ein an einer Seitenfläche offenes Rechteckgehäuse Anwendung finden, wobei an der oberen Seitenwand innenseitig der mit dem umlaufenden Bund versehene Haltebolzen befestigt ist und wobei das Gehäuse mit einer Rückwand sowie je mit einer links- und rechtsseitigen und einer oberen und einer unteren Seitenwand ausgestattet ist.

Die Erfindung wird nachfolgend anhand eines in der Zeichnung dargestellten Ausführungsbeispiels näher beschrieben. In der Zeichnung zeigen:
- Fig. 1: eine schematische Seitenansicht der Zugdeichselkupplung zwischen zwei Rollbehältern
- Fig. 2: eine Draufsicht auf die Zugdeichsel ohne die Rollbehälter
- Fig. 3: eine Vorderansicht des den Haltebolzen aufnehmenden Gehäuses in einer anderen Ausführungsform
- Fig. 4: eine Seitenansicht des Gehäuses nach Fig. 3

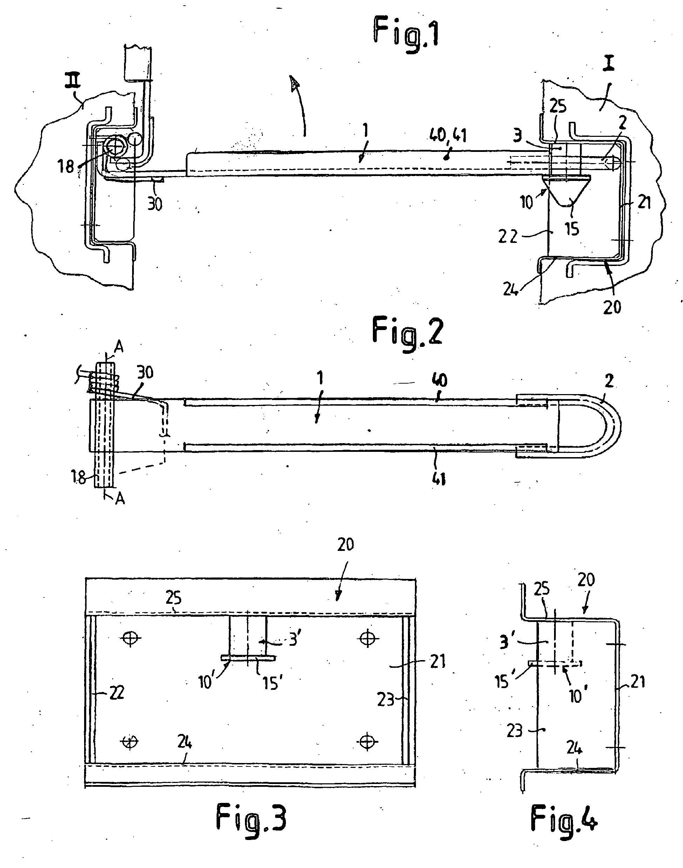

Gemäß Fig. 1 ist ein schematisch dargestellter Rollbehälter I mit einem ebenfalls schematisch und teilweise dargestellten Rollbehälter II über eine Zugdeichselkupplung miteinander zu verbinden. Hierbei ist an der Vorderseite des Rollbehälters II ein um eine quer zur Fahrrichtung des Behälters liegende Achse A-A schwenkbare Zugdeichsel 1 vorhanden, welche unterseitig von einer Torsionsfeder 30 beaufschlagt wird. Diese Zugdeichsel 1, die nach Fig. 2 zwei längs verlaufende Stege 40 und 41 aufweisen kann, besitzt stirnseitig eine Öse 2.

Die Öse 2 greift in einen hängend befestigten Haltebolzen 3, welcher an der Rückseite des vor dem Rollbehälter II befindlichen Rollbehälters I befestigt ist.

Nach Fig. 1 weist der Haltebolzen 3 einen im Durchmesser kleiner als die Öse 2 ausgebildeten Bund 10 auf, welcher eine mögliche Senkbewegung der Zugdeichsel 1 begrenzt. Bei dem Ausführungsbeispiel nach Fig. 1 ist hierbei der Bund 10 als Kegelstumpf 15 mit einem abgerundeten Endbereich ausgebildet.

Durch diese einfach aufgebaute Zugdeichselkupplung wird eine einwandfreie Verbindung zwischen den beiden Rollbehältern I und II sichergestellt, wobei in der in Fig. 1 dargestellten Situation beide Rollbehälter miteinander verbunden sind.

Zum Lösen besteht nun die Möglichkeit, die Zugdeichsel 1 entgegen der Wirkung der Torsionsfeder 30 nach unten zu drücken, wobei damit die Öse nicht mehr den Bund 10 des Haltebolzens 3 übergreift. Nunmehr kann die Zugdeichsel 1 durch Wirkung der Torsionsfeder 30 in Pfeilrichtung nach oben in die schematisch dargestellte Position schwenken.

In Fig. 2 ist in Draufsicht die Zugdeichsel 1 näher dargestellt, welche von der Torsionsfeder 30 beaufschlagt ist. Diese Torsionsfeder 30 ist beidseitig der Zugdeichsel 1 um einen Zapfen 18 angeordnet, welcher die Drehachse A-A für die Zugdeichsel 1 darstellt.

Während bei dem Ausführungsbeispiel nach Fig. 1 der Bund 10 als Kegelstumpf 15 ausgebildet ist, besteht bei der Ausführungsform nach Fig. 3 und 4 die Möglichkeit, dass ein Bund 10' Anwendung findet, welcher als flache Scheibe 15' gestaltet ist.

In beiden Ausführungsbeispielen des Bunds 10 bzw. 10' ist der Haltebolzen 3 bzw. 3' gemäß Fig. 3 und Fig. 4 hängend an einer oberen Seitenwand 25 eines Gehäuses 20 befestigt. Dieses Gehäuse 20 ist als offenes Rechteckteil ausgebildet mit einer linksseitigen und einer rechtsseitigen Seitenwand 22 und 23 sowie der oberen Seitenwand 25 und der unteren Seitenwand 24.

Das Rechteckgehäuse 20 ist nach Fig. 1 an der Rückseite des Rollbehälters I befestigt, wobei sich durch die spezielle Konstruktion des offenen Rechteckgehäuses 20 eine sehr robuste Bauart ergibt.

Durch die konstruktiv einfache Gestaltung der erfindungsgemäßen Zugdeichselkupplung ergibt sich vorteilhafterweise eine Kostenreduzierung, wobei jedoch in Folge der besonderen Form des Bunds 10 bzw. 10' des Haltebolzens 3 bzw. 3' eine einwandfreie Kupplungswirkung im Zusammenhang mit der Öse 2 der Zugdeichsel 1 sicher gestellt ist.

## Patentansprüche

1. Zugdeichselkupplung für einen Rollbehälter (I, II), mit einer an der Vorderseite des Rollbehälters (II) angeordneten, federbeaufschlagten, um eine quer zur Fahrtrichtung des Behälters (I, II) liegenden Achse (A-A) schwenkbaren Zugdeichsel (1), welche stimseitig über eine Öse (2) mit einem hängend befestigten Haltebolzen (3, 3') an der Rückseite eines davor befindlichen Rollbehälters (I) verbunden ist,
**dadurch gekennzeichnet,**
**dass** der Haltebolzen (3, 3') stirnseitig einen im Durchmesser kleiner als die Öse (2) ausgebildeten, eine Senkbewegung der Zugdeichsel (1) begrenzenden Bund (10, 10') aufweist.

2. Zugdeichselkupplung nach Anspruch 1, **dadurch gekennzeichnet, dass** der Bund (10, 10') als flache Scheibe (15') oder als Kegelstumpf (15) ausgebildet ist.

3. Zugdeichselkupplung nach Anspruch 1 oder 2, **gekennzeichnet durch** ein an einer Seitenfläche offenes Rechteckgehäuse (20), mit einer Rückwand (21), je einer links- und rechtsseitigen und einer oberen und unteren Seitenwand (22, 23, 24, 25), wobei an der oberen Seitenwand (25) innenseitig der mit dem umlaufenden Bund (10, 10') versehene Haltebolzen (3, 3') hängend befestigt ist.

## Claims

1. Tow-bar coupling for a rolling container (I, II), having a spring-loaded tow-bar (1) which is arranged on the front side of the rolling container (II) and can be swivelled about an axis (A-A) lying crosswise to the direction of travel of the container (I, II) and which on the end face is connected by way of an eye (2) to a holding pin (3, 3'), which is secured in a suspended manner, on the rear side of a rolling container (I) located in front, **characterised in that** the holding pin (3, 3') on the end face has a collar (10, 10') that is formed so that it is smaller in diameter than the eye (2) and limits a lowering movement of the tow-bar (1).

2. Tow-bar coupling according to claim 1, **characterised in that** the collar (10, 10') is formed as a flat disc (15') or as a truncated cone (15).

3. Tow-bar coupling according to claim 1 or 2, **characterised by** a rectangular housing (20) that is open on one side face and has a rear wall (21), a respective left-side and right-side and an upper and lower side wall (22, 23, 24, 25), with the holding pin (3, 3') that is provided with the circumferential collar (10, 10') being secured in a suspended manner on the inside on the upper side wall (25).

## Revendications

1. Attelage à timon pour un réservoir roulant (I, II) avec un timon (I) disposé sur le côté avant du réservoir roulant (II), soumis à l'action d'un ressort, et pouvant pivoter autour d'un axe (A-A) transversal à la direction de marche du réservoir (I, II) lequel timon est relié frontalement, par un oeillet (2), à un goujon de retenue (3, 3'), fixé suspendu, sur la face arrière d'un réservoir roulant (I) se trouvant devant,
**caractérisé**
**en ce que** le goujon de retenue (3, 3') présente frontalement un épaulement (10, 10') de diamètre plus petit que l'oeillet (2) et limitant un mouvement d'abaissement du timon (1).

2. Attelage à timon selon la revendication 1, **caractérisé en ce que** l'épaulement (10, 10') est réalisé sous la forme d'un disque plat (15') ou d'un tronc de cône (15).

3. Attelage à timon selon la revendication 1 ou 2, **caractérisé par** un boîtier rectangulaire (20), ouvert sur une surface latérale, avec une paroi arrière (21) une paroi latérale côté droit et côté gauche et une paroi latérale supérieure et inférieure (22, 23, 24, 25), le goujon de retenue (3, 3'), pourvu de l'épaulement périphérique, étant fixé suspendu, côté intérieur, à la paroi latérale supérieure (25).
